# EUROPEAN PATENT APPLICATION

(11) **EP 3 292 937 A1**
(43) Date of publication of application: **14.03.2018**
(21) Application number: 17186696.5
(22) Date of filing: 17.08.2017
(51) Int. Cl.: B23K 9/10, B23K 9/095, B23K 9/167, B23K 9/12

(54) **SYSTEMS AND METHODS FOR CHANGING ELECTRODES IN CONTINUOUS WELDING PROCESSES**

(30) Priority: 17.08.2016 US 201662376164 P
(71) Applicant: Weber & Scher MFG. Co., Inc., Lebanon Borough, NJ 08833-0366 (US)
(72) Inventor: SCHER, Gregory K., Lebanon Borough, NJ New Jersey 08833-0366 (US); BOGUT, Gregory S., Lebanon Borough, NJ New Jersey 08833-0366 (US); KLING, James, Lebanon Borough, NJ New Jersey 08833-0366 (US)
(74) Representative: Regimbeau

(57) **Abstract**

Disclosed herein are continuous welding systems and methods for changing electrodes in continuous welding operations. The continuous welding system may include a first and a second welding assembly. A controller may engage with each welding assembly and may individually energize either one of the welding assemblies or both welding assemblies to perform a continuous welding operation. Electrodes from one welding assembly may be removed and replaced without interrupting the operation of at least one other welding assembly. A method of changing electrodes in a continuous welding operation may include performing a welder swap sequence to replace one electrode from a first welding assembly without interrupting the operation of at least one other welding assembly.

## Description

### CROSS-REFERENCE TO RELATED APPLICATION

The present application claims the benefit of the filing date of U.S. Provisional Patent Application No. 62/376,164, filed August 17, 2016, the disclosure of which is hereby incorporated herein by reference.

### FIELD OF THE INVENTION

The present invention relates to systems and methods for continuous welding processes and in particular relates to systems and methods for changing electrodes in continuous welding processes.

### BACKGROUND OF THE INVENTION

Gas tungsten arc welding ("GTAW") is known to provide greater arc penetration than conventional welding methods and consequently provide for stronger, higher quality welds. GTAW is widely used in manufacturing, including in the cable and wire industry to butt weld longitudinal seams of metal tubes, cable armors, and outer shields. Heat generated between a tungsten electrode and a moving metal tube in a stationary welding system is used to butt weld open longitudinal seams of metal tubes. Inert shielding gas, such as argon and/or helium, is typically used to protect the weld area and the tungsten electrodes.

However, despite the inert gas shielding, heat produced during GTAW process causes tungsten electrodes to overheat and melt or otherwise deteriorate. Erosion or "burn-off" may deteriorate electrodes and require them to be replaced to ensure proper weld quantity. Electrode replacements are carried out after shutting down the welding system. This welding stoppage will disrupt the continuous welding of a metal tube and therefore limit the length of a metal tube that can be fabricated. Failure to replace deteriorated electrodes may lead to poor weld quality. Consequently, stoppages for electrode replacement may disrupt continuous welding processes and result in significant material wastage in some instances such as metal tube welding production. Maintaining a continuous welding process is especially necessary in welding long metal tubes to avoid product defects, material wastage and delays in production.

Therefore, there exists a need to provide a system and method to change electrodes for continuous welding processes.

### BRIEF SUMMARY OF THE INVENTION

Disclosed herein are systems and methods for changing electrodes in continuous welding processes.

In a first aspect of the present invention, a welding system for a continuous welding operation is provided. The welding system may include a first welding assembly, a second welding assembly and a controller. The first welding assembly may have a first welding torch with a first electrode and may be connected to a first power source. The first welding assembly may be able to independently perform the continuous welding operation in a first mode. The second welding assembly may have a second welding torch with a second electrode and may be connected to a second power source. The second welding assembly may be able to independently perform the continuous welding operation in a second mode. The controller may be in communication with the first and second power sources. The controlled may be able to simultaneously control power to the first and power sources such that the welding assembly may perform a switchover from the first mode to the second mode without interrupting the continuous welding operation. The first electrode may be removed and replaced in the second mode without interrupting the second mode and the second electrode may be removed and replaced in the first mode without interrupting the first mode.

In accordance with the first aspect, the first and second electrodes may simultaneously perform the continuous welding operation during the switchover. The continuous welding operation may be a butt-welding operation to weld a longitudinal seam on a metal tube, the metal tube being moved with reference to the welding system. The first and second electrodes may be on opposite sides of the longitudinal seam.

Further in accordance with the first aspect, the controller may be a programmable logic controller. The programmable logic controller may reduce power to the first welding assembly and simultaneously increase power to the second welding assembly during the switchover. The rate of power reduction to the first welding assembly and rate of power increase to the second welding assembly may be linear. The welding assembly may include a human machine interface in communication with the programmable logic controller. The human machine interface may allow an operator to input control parameters for the switchover. The input control parameters may include any of a switchover time, weld speed, weld quality, power reduction, power acceleration and welders power ratio. The switchover may be manually initiated by an operator.

Still further in accordance with the first aspect, the welding system may include an electrode monitor to detect electrode deterioration. The welding system may include a weld quality monitor to detect weld quality. The weld quality monitor may initiate the switchover based on a predetermined weld quality requirement. The first and second torches may have removable caps for replacing electrodes. The welding system may include three or more welding assemblies in communication with the controller. The welding operation may be a gas tungsten arc welding procedure.

A second aspect of the present invention is a method for performing a continuous welding operation. A method in accordance with this aspect of the invention may include the steps of performing a welding operation in first mode with a first electrode, performing a switchover from the first mode to a second mode without disrupting the welding operation and replacing the first electrode in the second mode. The welding operation in the first mode may be performed with a first welding assembly having a first welding torch and the first electrode. The first welding assembly may be connected to a first power source. The welding operation in the second mode may be performed with the second welding assembly. The second welding assembly may have a second welding torch and a second electrode. The second welding assembly may be connected to a second power source. The switchover may be performed by a controller in communication with the first and second power sources. The switchover from the second mode to back to the first mode may be performed to maintain the continuous welding operation.

In accordance with the second aspect, the switchovers may be automatically initiated by sensors and the step of and replacing the electrodes may be automatically performed by mechanical actuators.

A third aspect of the present invention is a method of performing a switchover from a first electrode to a second electrode in a continuous welding operation. A method in accordance with this aspect of the invention may include the steps of providing a first welding assembly, providing a second welding assembly, providing a controller and inputting control parameters to the controller to perform a switchover from the first welding assembly to the second welding assembly without disrupting the continuous welding operation. The first welding assembly may have a first electrode capable of independently performing the welding operation. The second welding assembly may have a second electrode capable of independently performing the welding operation. The controller may be in communication with the first and second welding assemblies.

### BRIEF DESCRIPTION OF THE DRAWINGS

A more complete appreciation of the subject matter of the present invention and of the various advantages thereof can be realized by reference to the following detailed description in which reference is made to the accompanying drawings:
FIG. 1 is a schematic front view of a welding system according to a first embodiment of the present invention;
FIG. 2 is a schematic side view of the welding system of FIG. 1;
FIG. 3 is a schematic side view of a welding system according to a second embodiment of the present invention;
FIG. 4A-4C are schematic front views of the welding system of FIG.1 showing the sequential steps of a welder swap sequence according to another embodiment of the present invention;
FIG. 5 is a diagrammatic view of the welding system of FIG. 1;
FIG. 6 is a diagrammatic view of a welder swap sequence;
FIG. 7 is a graph showing a power output during the welder swap sequence of FIG. 6;
FIG. 8 is a diagrammatic view of input and output parameters of a programmable logic controller shown in FIG. 6; and
FIG. 9 is a diagrammatic view of performing a welder swap sequence according to yet another embodiment of the present invention.

### DETAILED DESCRIPTION

Reference will now be made to embodiments of the present invention illustrated in the accompanying drawings. Wherever possible, the same or like reference numbers will be used throughout the drawings to refer to the same or like features. It should be noted that the drawings are in simplified form and are not drawn to precise scale. Additionally, the term "a," as used in the specification, means "at least one." The terminology includes the words above specifically mentioned, derivatives thereof, and words of similar import.

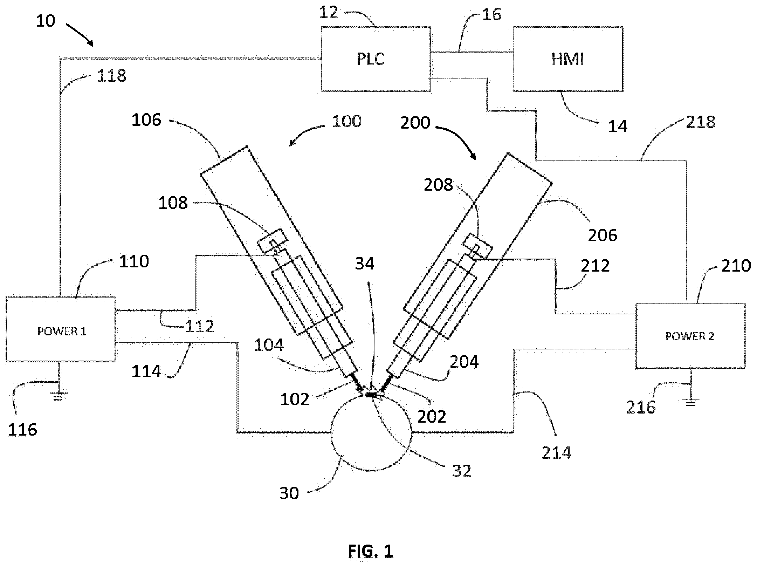

Referring now to FIG. 1, there is shown a welding system 10 according to a first embodiment of the present invention. Welding system 10 includes a first welding assembly 100 and a second welding assembly 200. The first welding assembly has a first electrode 102 attached to a first welding torch 104. While a tungsten electrode is generally described herein, other electrodes may be used in conjunction with welding assembly 100. A first actuator 106 connected to first welding torch 104 regulates torch positon with respect to a workpiece 30 through an arc length control ("ALC") microprocessor (not shown). A removable cap 108 on first torch 104 can be unscrewed from the first welding torch to allow an operator to remove a deteriorated or spent electrode and reposition a fresh electrode in torch 104. Welding assembly 100 includes a first power source 110 supplying power to first welding torch 104 through power line 112. Power source 110 can be a constant current ("CC"), a constant voltage ("CV"), or a variable power source and can include both alternating and direct current systems. As shown herein, power source 100 provides direct current resulting in first electrode 102 being a negatively charged electrode ("DCEN"). A second line 114 from first power source 110 is connected to workpiece 30 to positively charge the workpiece as best shown in FIG. 1. A line 116 from power source 110 is used to ground welding assembly 100.

Second welding assembly 200 is similar to first welding assembly 100, and therefore like elements are referred to with similar numerals within the 200-series of numbers. For instance, second welding assembly includes second electrode 202 attached to second welding torch 204 which is regulated by second actuator 206. A second separate power source 210 supplies power to second welding assembly 200, and ensures that first and second welding assemblies can operate independently. Although the second welding assembly shown herein is similar to the first welding assembly, the second welding assembly may vary from the first welding assembly in other embodiments.

First and second power sources 116, 216 are connected by lines 118 and 218 to a PLC 12 respectively. As more fully explained below, PLC 12 can simultaneously control power supply to first and second welding assemblies to operate either the first or the second welding assembly, or to operate both assemblies simultaneously. A human machine interface ("HMI") 14 allows an operator to input various settings and instructions to the PLC through input parameters 16.

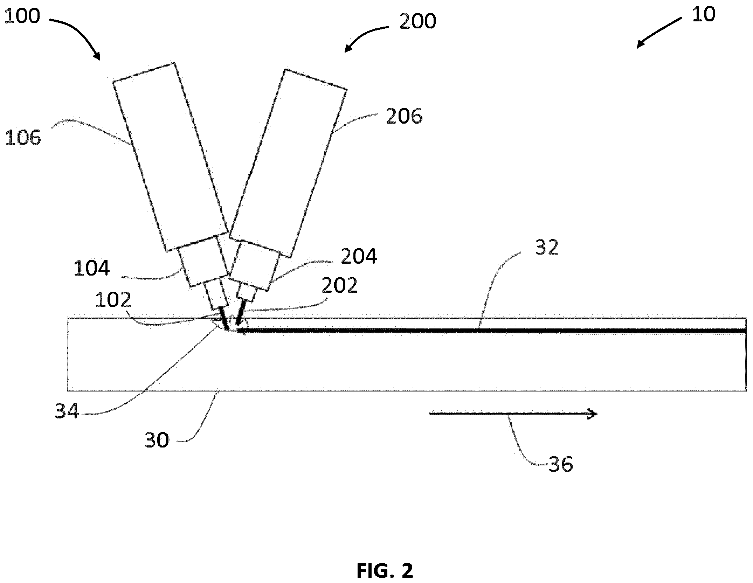

FIG. 2 shows a schematic side view of welding system 10. Welding assemblies 100, 200 are aligned and positioned over a moving workpiece 30. Electrodes 102 and 202 are aligned on opposite sides of workpiece 30 as best shown in FIG. 1. As shown in FIGS. 1 and 2, both electrodes 102 and 202 are simultaneously energized in this mode. Electrons emitted from both electrodes travel across arc 34 creating thermal ionization of a shielding gas and melting workpiece 30 to produce a longitudinal weld 32. Shielding gases, such as helium or argon, can be used to protect the weld site from oxidation and deterioration of the electrode. Line arrow 36 depicts the direction of workpiece 30 in reference to the stationary welding assemblies 100, 200. Velocity of the workpiece 30 can be adjusted to control weld quality, weld strength and production output depending on the nature of the workpiece and production requirements. For example, velocity of the longitudinal metal cable workpiece 30 shown in FIGS. 1 and 2 may be increased to reduce weld temperature at the weld zone or reduced to increase weld temperature at the weld zone. While a longitudinal metal cable workpiece 30 is shown in this embodiment, any other workpiece may be used in conjunction with welding system 10. Although two welding assemblies with two electrodes are described in this embodiment, three or more electrodes may also be used to work in conjunction with the PLC and HMI according to other embodiments of the present invention.

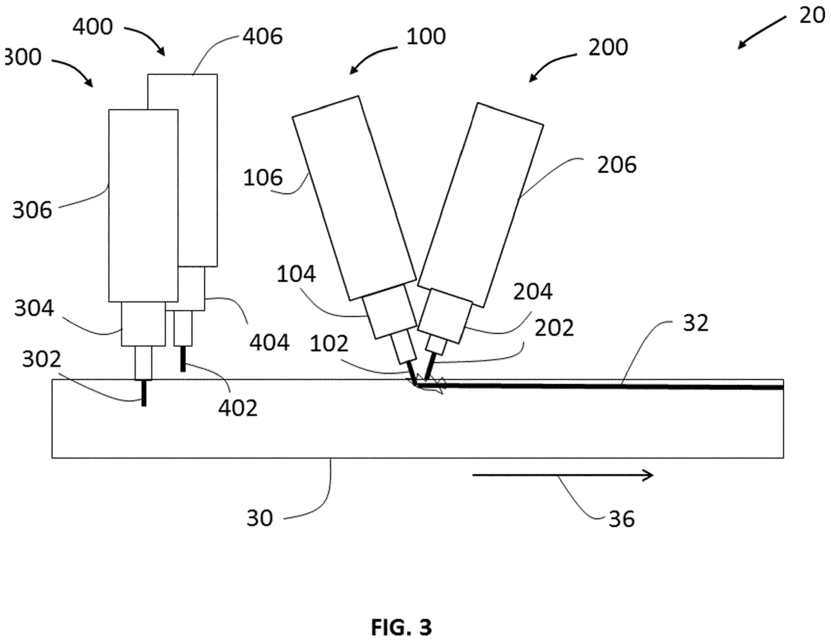

Referring now to FIG. 3, there is shown a welding system 20 according to another embodiment of the present invention. Welding system 20 is similar to welding system 10 but includes a second set of welding assemblies 300 and 400. Welding assemblies 300 and 400 are similar to welding assemblies 100 and 200, and therefore like elements are referred to with similar numerals within the 300-series and 400-series of numbers respectively. For instance, welding assembly 300 includes third electrode 302 attached to third welding torch 304 which is actuated by second actuator 306. Welding assemblies 300 and 400 may be connected to PLC 12 and HMI 14 in communication with welding assemblies 100 and 200, or may be separately connected to a second PLC and a second HMI (not shown) to be operated independently from welding assemblies 100 and 200. Welding assemblies 100 and 200 are in operation in FIG. 3, whereas welding assemblies 300 and 400 are on standby. Welding assemblies 300 and 400 can be used in conjunction with assemblies 100 and 200 to increase production speed, *i.e.*, increased workpiece velocity, or used independently when assemblies 100 and 200 are placed on standby for maintenance. While two sets of welding assemblies are shown in this embodiment, other embodiments may have more than two sets of welding assemblies. Alternatively, single welding assemblies, *i.e.*, with only one welding torch, may also be combined with dual welding assemblies. While independent PLC and HMI controls are described for each set of welding assemblies, PLC and HMI may serve more than one set of welding assemblies in other embodiments. It is to be understood that while a tungsten electrode is envisioned to be used with the welding systems described herein, electrodes made of different material may also be used. Various other accessories such as a closed water cooling system may also be used in conjunction with the welding systems of the current disclosure.

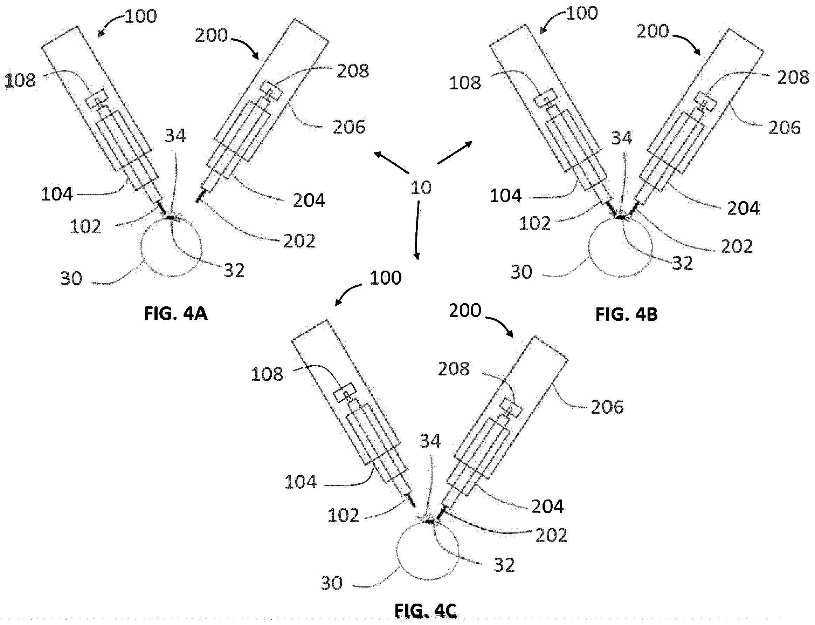

FIGS. 4A - 4B show schematic views of a welder swap sequence according to an embodiment of the present invention. FIG. 4A shows a first welding mode, wherein welding assembly 100 welds workpiece 30 and welding assembly 200 is in standby mode. PLC 12 ensures that only first power source 110 is energized in this mode. Power source 210 is placed in standby. FIG. 4B shows a second welding mode wherein welding assembly 100 and welding assembly 200 simultaneously weld workpiece 30. In this second mode, welding arc 34 represents a combined arc production from welding assembly 100 and welding assembly 200. Although two electrodes are energized in the second mode, weld 32 is similar to the first mode because PLC 12 ensures that total power supplied to both assemblies is equal to the power supplied to the welding assembly 100 in the first mode. As more fully explained below, PLC 12 ramps down power supply to welding assembly 100 while simultaneously ramping up power supply to welding assembly 200. FIG. 4C shows a third mode wherein the PLC has fully energized welding assembly 200 and de-energized welding assembly 100. Welding assembly 100 is now placed on standby with welding assembly 200 performing the welding operation. An operator may now unscrew cap 108 from torch 104 and replace electrode 102. Welding assemblies 100 and 200, and specifically the welding torches 104 and 204 are carefully positioned to allow an operator to replace a spent electrode from a welding assembly on standby without interrupting the energized opposite welding assembly. A second welder swap sequence can now be performed wherein welding assembly 100, with the newly replaced electrode 102, can replace welding assembly 200. Thus, continuous welding of workpiece 30 can be performed using the welder swap sequence of welding system 10. In other embodiments, a third or fourth welding assembly may be used in conjunction with the first and second welding assemblies to provide additional time between electrode swaps. For example, an operator may wait until a first, second and third electrode are deteriorated to replace these electrodes when the fourth electrode is in operation for a welding system having four welding assemblies.

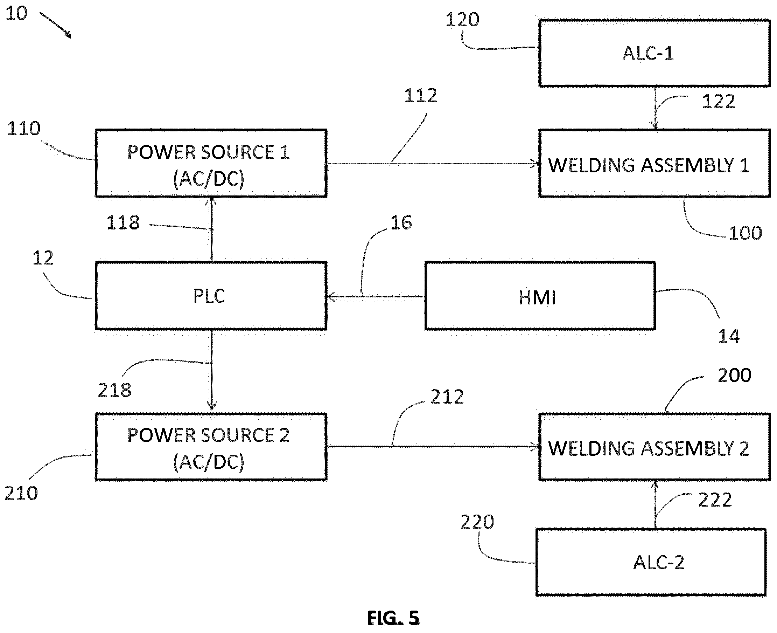

Referring now to FIG. 5, there is shown a diagrammatic view of the welding system of FIG. 1. HMI 14 serves as a graphical user interface for an operator to input various control parameters to PLC 12. The operator can also use HMI 14 to initiate the welder swap sequence. PLC 12 interfaces with first power source 110 and second power source 210. Depending on the input parameters 16 received from HMI 14, PLC 12 computes and regulates power supply to first and second power sources to, *inter alia*, perform the welder swap sequence. First welding assembly 100 and second welding assembly 200 are attached by connection lines 122 and 222 to first ALC 120 and second ALC 220 respectively as best shown in FIG. 5. ALCs 120 and 220 perform, *inter alia*, automatic setting of the starting arc gap and allow for higher weld travel speeds across workpiece 30.

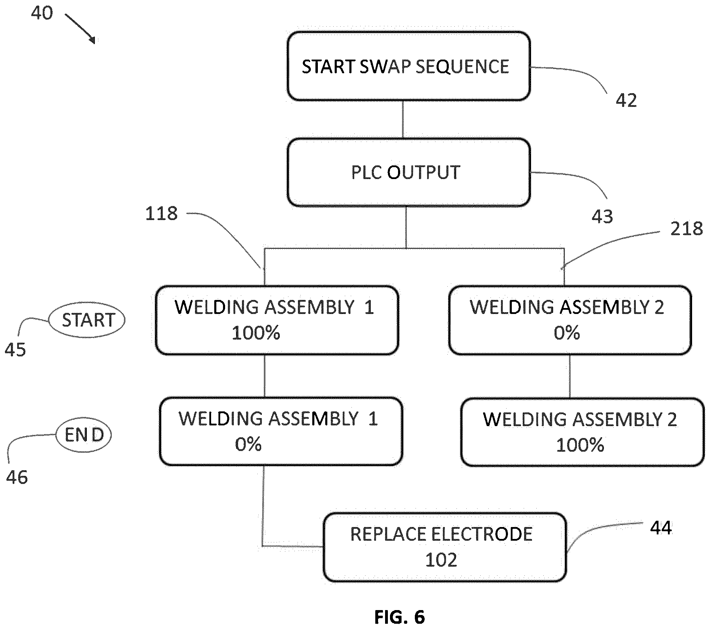

FIG. 6 is a diagrammatic view of a welder swap sequence 40 according to another embodiment of the present invention. An operator can initiate swap sequence 42 through HMI 14. Weld quality and/or electrode deterioration can be observed through a welding camera or other monitoring and visualization systems to determine swap sequence initiation 42. Alternatively, an automatic monitoring system to automatically initiate swap sequence based on detecting predetermined weld quality and electrode deterioration thresholds may be used. In still other embodiments, a preset weld time or production rate may be used to automatically initiate weld swap sequence 42. Once the welder swap sequence 42 has been initiated, PLC 12 computes and outputs 43 power acceleration and deceleration based on input parameters 16.

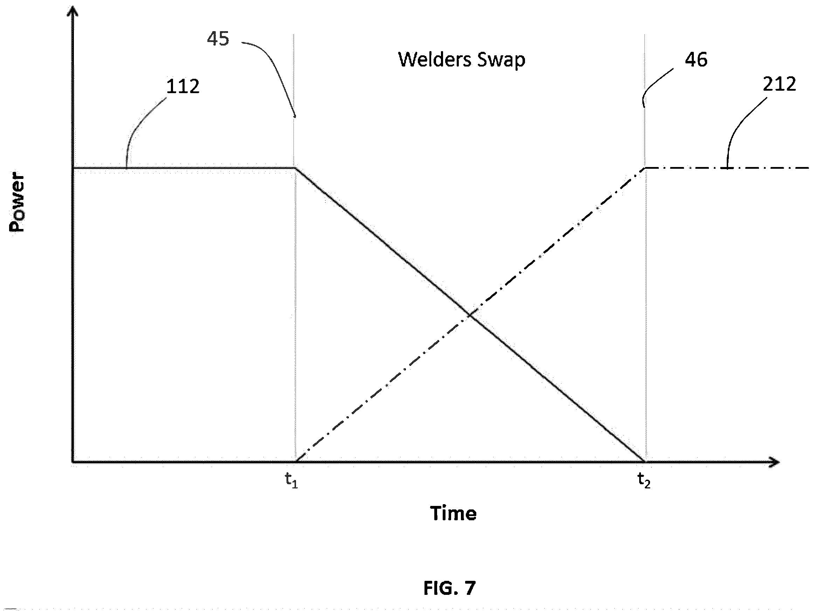

Referring now to FIG. 7, there is shown a graph with power acceleration and deceleration for first welding assembly 100 and second welding assembly 200 before, during and after a welding swap sequence. Power acceleration and deceleration rates shown in FIG. 7 are controlled by PLC output 43. Prior to initiation of the welder swap sequence 42, first welding assembly 100 is fully energized by first power source 110 through power line 112, whereas, second welding assembly 200 is on standby. When welder swap sequence is initiated 42 at time 45, power supply 112 to first welding assembly 100 is ramped down and power supply 212 to second welding assembly 200 is ramped up as best shown in FIG. 7. At time 46, the welder swap sequence concludes by fully energizing second welding assembly 200 and de-energizing first welding assembly 100. Although a linear power acceleration and deceleration is shown in this embodiment, non-linear power acceleration and deceleration rates may be used to execute the welder swap sequence. After first welding assembly 100 has been placed on standby at the end of the swap sequence, an operator may remove cap 108 from torch 104 and replace electrode 102.

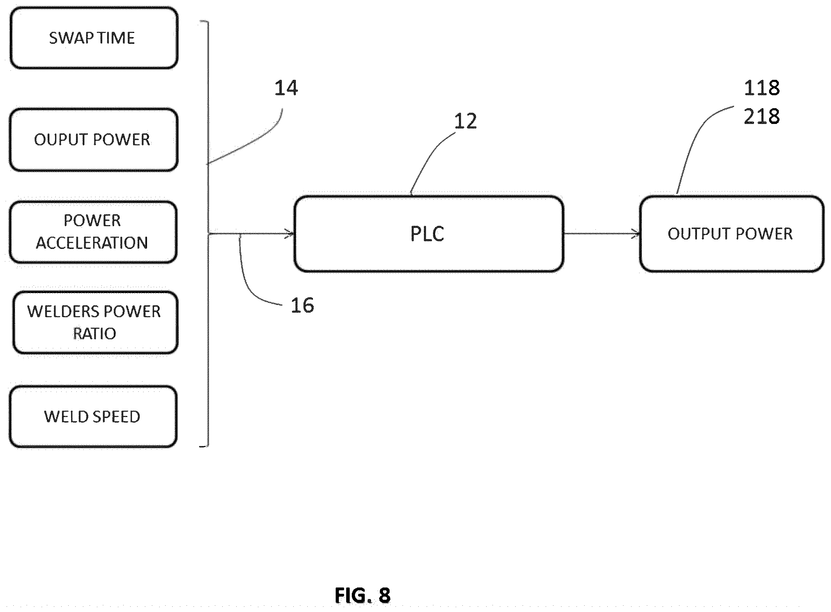

FIG. 8 is a diagrammatic view of input 16 and output parameters of PLC 12. As more fully explained above, HMI 14 serves as a graphical user interface to accept input parameters 16 to control PLC output. Input parameters 14 can include swap time to determine the rate of power acceleration deceleration. For example, a longer swap time will allow for gradual power changes to accomplish the swap sequence, whereas a shorter swap time will require greater power modulation rates. Output power level can also determine PLC power output, wherein a larger output power level will generally require a longer swap time to accomplish the welder swap sequence. Similarly, other parameters such as rate of power acceleration and deceleration, power ratio, and weld speed can be input to PLC 12 to determine and control the welder swap sequence as desired.

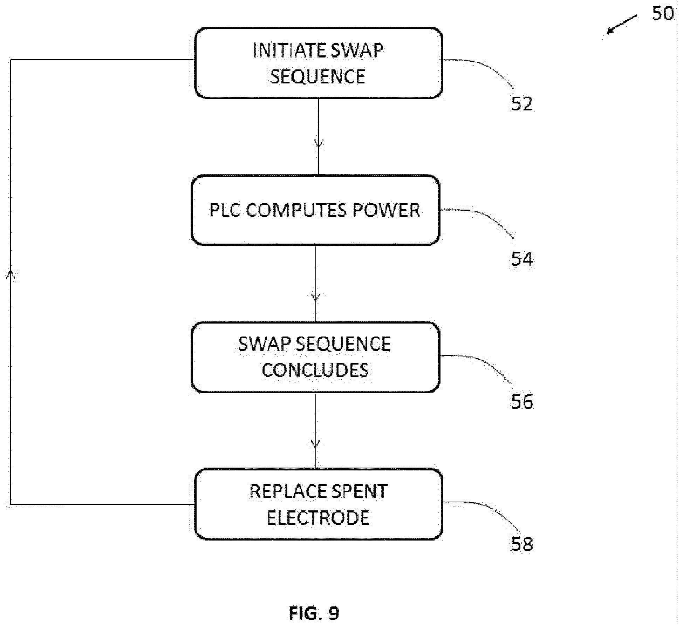

Referring now to FIG. 9, there is shown a method for performing a welder swap sequence 50 using welding assembly 10 according to another embodiment of the present invention. Welder swap sequence 50 allows welding assembly 10 to perform a continuous welding operation without interruption. This is especially critical in continuous welding of long metal tubes because interrupting the welding operation to replace deteriorated electrodes may result in poor weld quality leading to material wastage. As best shown in FIGS. 2 and 3, a butt-welding operation on metal tube 30 with an open longitudinal seam must be continuously performed to achieve consistent weld quality to avoid discarding improperly welded tube material. The swap sequence can be manually initiated 52 by an operator through HMI 14 or by an automatic monitoring system as more fully described above. Once the swap sequence is initiated, PLC 14 controls power acceleration and deceleration 54 to welding assemblies 100 and 200 based upon predetermined input 16 transmitted from HMI 14. Swap sequence concludes 56 by fulling energizing second welding assembly 200 and de-energizing welding assembly 100. An operator can now replace 58 electrode 102 from standby welding assembly 100. Alternatively, mechanical actuators may be used to replace electrode 102. First welding assembly 100 is now ready to be used and can perform the welding procedure by initiating another swap sequence to replace second welding assembly 200. The swap sequence between two or more welding systems may be repeated over and over again in this manner to allow for continuous welding. While manual intervention to identify/trigger welder swap and replace spent electrodes is generally described herein, other embodiments may be full automatic requiring no manual input once the input parameters and weld requirement have been input.

Furthermore, although the invention disclosed herein has been described with reference to particular features, it is to be understood that these features are merely illustrative of the principles and applications of the present invention. It is therefore to be understood that numerous modifications, including changes in the sizes of the various features described herein, may be made to the illustrative embodiments and that other arrangements may be devised without departing from the spirit and scope of the present invention. In this regard, the present invention encompasses numerous additional features in addition to those specific features set forth in the paragraphs above. Moreover, the foregoing disclosure should be taken by way of illustration rather than by way of limitation as the present invention is defined in the examples of the numbered paragraphs, which describe features in accordance with various embodiments of the invention.

## Claims

1. A welding system (10) for a continuous welding operation, the welding system comprising:
a first welding assembly (100) having a first welding torch (104) with a first electrode (102) and connected to a first power source (110), the first welding assembly (100) performing the continuous welding operation in a first mode;
a second welding assembly (200) having a second welding torch (204) with a second electrode (202) and connected to a second power source (210), the second welding assembly (200) performing the continuous welding operation in a second mode; and
a controller (12) in communication with the first and second power sources (110, 210),
wherein the controller (12) controls power to the first and second power sources (110, 210) such that the welding assembly (10) can perform a switchover from the first mode to the second mode while continuously performing the continuous welding operation, and
wherein the first electrode (102) can be removed and replaced in the second mode without interrupting the second mode and the second electrode (202) can be removed and replaced in the first mode without interrupting the first mode.

2. The welding system (10) of claim 1, wherein the first and second electrodes (102, 202) simultaneously perform the continuous welding operation during the switchover.

3. The welding system (10) of claim 1, wherein the continuous welding operation is a butt-welding operation to weld a longitudinal seam (32) on a metal tube (30), the metal tube (30) being moved in a longitudinal direction (36) with reference to the welding system (10).

4. The welding system (10) of claim 3, wherein the first and second electrodes (102, 202) are on opposite sides of the longitudinal seam (32).

5. The welding system (10) of claim 1, wherein the controller is a programmable logic controller (12).

6. The welding system (10) of claim 5, wherein the programmable logic controller (12) reduces power to the first welding assembly (100) and simultaneously increases power to the second welding assembly (200) during the switchover.

7. The welding system (10) of claim 6, wherein the rate of power reduction to the first welding assembly (100) and rate of power increase to the second welding assembly (200) is linear.

8. The welding system (10) of claim 5, further including a human machine interface (14) in communication with the programmable logic controller (12), the human machine interface (14) allowing an operator to input control parameters for the switchover.

9. The welding system (10) of claim 8, wherein the input control parameters may include any of a switchover time, weld speed, weld quality, power reduction, power acceleration and welders power ratio.

10. The welding system (10) of claim 1, further including a weld quality monitor to detect weld quality.

11. The welding system (10) of claim 10, wherein the weld quality monitor can initiate the switchover based on a predetermined weld quality requirement.

12. The welding system (10) of claim 1, wherein the first and second welding torches (104, 204) have removable caps (108, 208) for replacing electrodes (102, 202).

13. The welding system (10) of claim 1, wherein the welding operation is a gas tungsten arc welding procedure.

14. A method for performing a continuous welding operation comprising the steps of:
performing a welding operation in a first mode with a first welding assembly (100) having a first welding torch (104) and a first electrode (102), the first welding assembly (100) connected to a first power source (110),
performing a switchover from the first mode to a second mode without disrupting the welding operation, wherein a second welding assembly (200) performs the welding operation in the second mode, the second welding assembly (200) having a second welding torch (204) and a second electrode (202), the second welding assembly (200) connected to a second power source (210), the switchover being performed by a controller in communication with the first and second power sources (110, 210), and
replacing the first electrode (102) from the first welding torch (104) in the second mode, wherein a switchover from the second mode to back to the first mode can be performed to maintain the continuous welding operation.

15. A method of performing a switchover from a first electrode (102) to a second electrode (202) in a continuous welding operation comprising the steps of;
providing a first welding assembly (100) with a first electrode (102) capable of independently performing the welding operation;
providing a second welding assembly (200) with a second electrode (202) capable of independently perform the welding operation;
providing a controller (12) in communication with the first and second welding assemblies (100, 200), and
inputting controller input parameters to perform a switchover operation from the first welding assembly (100) to the second welding assembly (200) without disrupting the continuous welding operation.
